# EUROPEAN PATENT SPECIFICATION

(11) **EP 1 058 044 B1**
(45) Date of publication and mention of the grant of the patent: **07.05.2003**
(21) Application number: 00304699.2
(22) Date of filing: 02.06.2000
(51) Int. Cl.: F16L 37/34

(54) **Coupling device**
Kupplungsvorrichtung
Dispositif d'accouplement

(30) Priority: 03.06.1999 JP 15641699
(43) Date of publication of application: 06.12.2000
(73) Proprietor: Pascal Kabushiki Kaisha, Itami-shi, Hyogo-ken 664-0006 (JP)
(72) Inventor: Kimura, Seiji, c/o Pascal Kabushiki Kaisha, Itami-shi, Hyogo 664-0006 (JP)
(74) Representative: Senior, Alan Murray

(56) References cited:
- EP-A- 0 085 010
- DE-A- 3 904 098
- DE-A- 4 035 453
- US-A- 3 866 638

## Description

The present invention relates to a coupling device having a male coupler and a female coupler, and particularly to an improved coupling device which has a valve at the outlet of a female coupler adapted for having a certain shut-down property to prevent a fluid from leaking out from the female coupler.

A variety of coupling devices (each comprising a male coupler and a female coupler) have been introduced for practical use in industrial machines to detachably connect one fluid path to the other in a fluid supply system (e.g. of hydraulic or pneumatic system). For example, a work pallet for detachably holding one or more works to be machined by a machining center includes one or more hydraulic clamping apparatuses. A coupling device is commonly provided for connecting a hydraulic path to the hydraulic clamping apparatus for supplying a hydraulic pressure.

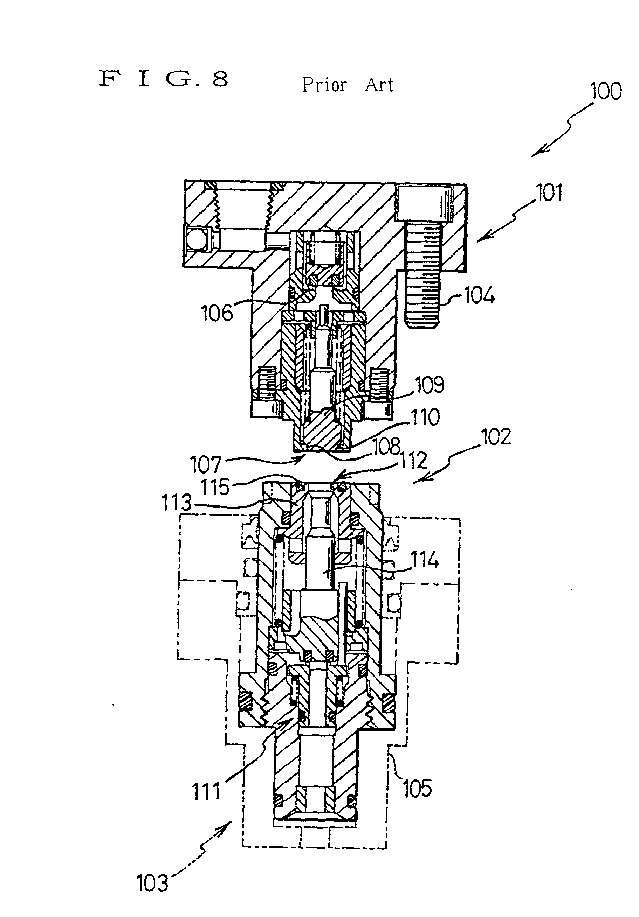

As shown in Figs. 8 to 10, a prior art coupling device 100 developed by the same applicants as of the present invention comprises a male coupler 101, a female coupler 102, and a hydraulic cylinder 103.

While the male coupling 101 is fixed with a plurality of bolts 104, the female coupler 102 is located lower than the male coupler 101 and joined to the hydraulic cylinder 103 for moving forward and backward. The female coupler 102 is installed in a cylinder body 105 of the hydraulic cylinder 103 and driven by the hydraulic cylinder 103 to move between coupled position and the separated position.

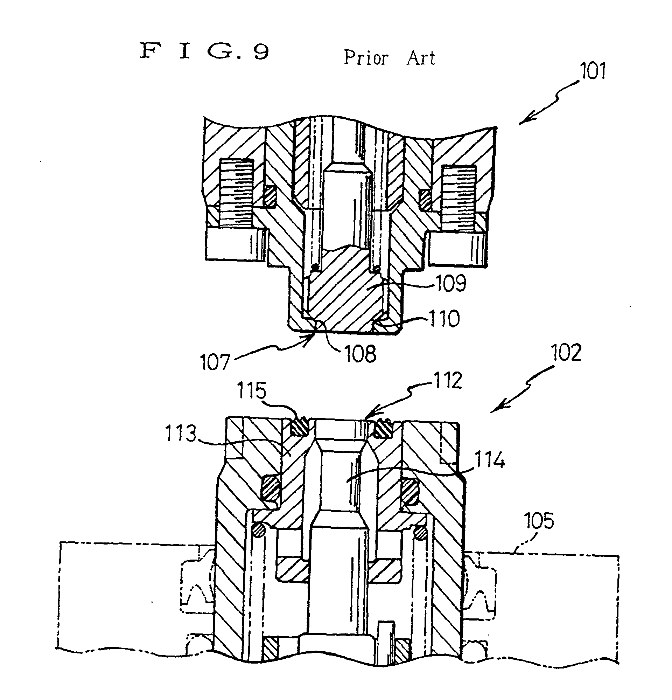

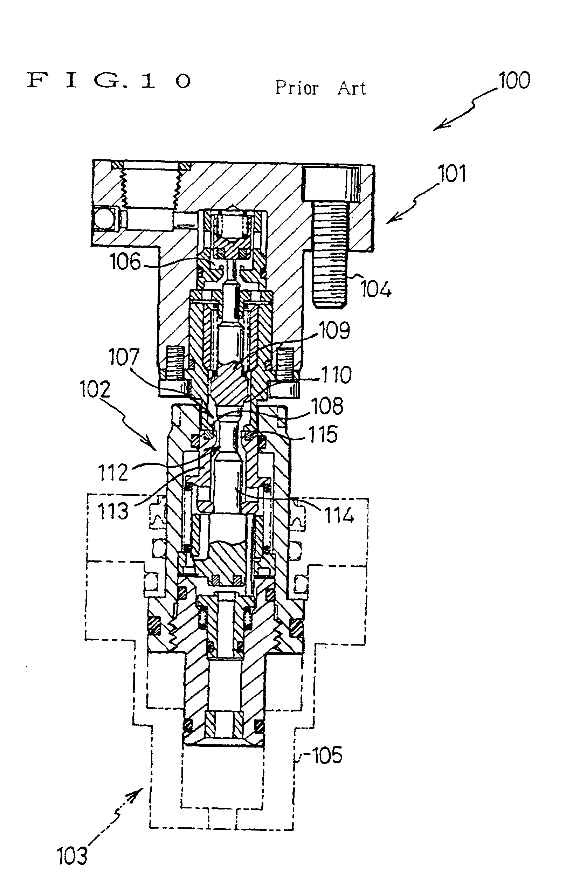

The male coupler 101 has a protruded cylindrical portion provided at the lower end thereof which can be inserted into the upper end of the female coupler 102. When the two couplers 101 and 102 are coupled to each other (See Fig. 10), both a main opening/closing valve 106 and an auxiliary opening/closing valve 107 in the male coupler 101 open their hydraulic passages. When the two couplers 101 and 102 are separated from each other (See Figs. 8 and 9), both the main valve 106 and the auxiliary valve 107 in the male coupler 101 shut down their hydraulic passages.

As a valve shaft 109 of the auxiliary valve 107 in the coupled position retracts in an upward direction relative to the protruded cylindrical portion, its valve body portion 110 comes into direct contact, with metal touch, with the annular tapered face of a valve seat portion 108 of the auxiliary opening/closing valve 107. And therefore, the valve 107 can be constituted as a seat type valve.

When the two couplers 101 and 102 are in the coupled position (See Fig. 10), both a main opening/closing valve 111 and an auxiliary opening/closing valve 112 in the female coupler 102 open their hydraulic passages. In the separated position (See Figs. 8 and 9), both the main valve 111 and the auxiliary valve 112 shut down their hydraulic passages. As shown in Fig. 9, while the main valve 111 shuts down its hydraulic passage in the separated position, the passage between a cylindrical member 113 and a shaft member 114 of the auxiliary valve 112 is closed. Because the shaft member 114 moves into the protruded cylindrical portion of the male coupler 101 in the coupled position as shown in Fig. 10, it will be difficult to constitute the auxiliary opening/closing valve 112 as a seat type valve. Accordingly, the auxiliary valve 112 permits its shaft member 114 to fit at its distal end into a valve face opening of the cylindrical member 113 for closing the passage. The distal end of the cylindrical member 113 is thus equipped with an annular seal element 115 made of a synthetic resin material to seal off the lower end of the protruded cylindrical portion of the male coupler 101 in the coupled position.

When connected to a hydraulic source provided with a oil pressurizing means such as an electric pressure pump, the system is supplied with a hydraulic oil which may contain some air. As a result, when the two couplers 101 and 102 are separated from each other, minute bubbles of air may be trapped in the female coupler 102 and then leak out with oil from the auxiliary valve 112, resulting in the loss of the hydraulic oil and polluting the environment of the coupling device.

For example, by providing a separable structure of the shaft member 114 of the female coupler 102, it will be possible to constitute the auxiliary opening/closing valve 112 as a seat type valve like that of the male coupler 101. However, the internal pressure in the female coupler 102 is decreased close to an ambient pressure in the separated position, hardly pressing against the seat portion. Accordingly, the leakage of air and oil from the auxiliary opening/closing valve 112 can not be avoided. In addition, because the oil of higher pressure leaked from the main opening/closing valve 111 may act on the distal end of the female coupler 102 and exert a large force against the shaft member 114, it is an adverse idea to decrease the diameter of the shaft member 114.

It is an object of the present invention to provide a coupling device which can prevent any leakage of a fluid from an auxiliary opening/closing valve in its female coupler with a simpler arrangement and also seal the fluid containing air in the female coupler even if the pressure of the fluid remains or is as low as the ambient pressure level when its two couplers are separated from each other.

The coupling device according to the present invention has a male coupler and a female coupler capable of detachably coupling with the male coupler to connect and disconnect the passage of a pressurized fluid.

In particular, the male coupler comprises: a first valve mechanism including an protruded cylindrical member provided for partially inserting into the female coupler, a valve shaft installed for axial movements in the inner side of the protruded cylindrical member, and a valve body portion provided on the valve shaft for engaging and disengaging from the inner side with a valve seat portion provided in the protruded cylindrical member to shut down the passage of a fluid between the protruded cylindrical member and the valve shaft; and a spring for urging the valve shaft towards a valve closed position.

The female coupler comprises: a second valve mechanism including a main body case having an engaging bore provided therein into which the protruded cylindrical member can be advanced, a shaft member mounted in the main body case, a cylindrical member fitted on the shaft member for axially sliding movements and positioned opposite to the distal end of the protruded cylindrical member, and a valve body portion provided on the cylindrical member for engaging and disengaging from the inner side with a cylindrical valve face portion provided near the distal end on the shaft member to shut down the passage of a fluid between the cylindrical member and the shaft member; and a spring for urging the cylindrical member towards a valve closed position. Additionally, annular seal element having a first annular seal portion for sealing between the protruded cylindrical member and the cylindrical member in the coupled position and a second annular seal portion forming the valve body portion of the cylindrical member, first and second annular seal portions being formed integrally, is provided on the distal end of the cylindrical member.

When the male coupler and the female coupler are separated from each other, the first valve mechanism in the male coupler allows the valve body portion of the valve shaft to be pressed by the spring directly on the valve seat portion of the protruded cylindrical member to shut down the fluid passage between the protruded cylindrical member and the valve shaft. The second valve mechanism in the female coupler causes the cylindrical member to be urged towards the valve closed position by the spring so that the valve body portion of the cylindrical member comes into direct contact with the cylindrical valve face portion close to the distal end of the shaft member, hence closing the fluid passage between the cylindrical member and the shaft member. The annular seal element mounted on the distal end of the cylindrical member has the annular seal portion which incorporates the valve body portion of the cylindrical member, thus increasing the shut-down effect of the second valve mechanism in the female coupler and preventing any leakage of the fluid from the second valve mechanism when the two couplers are separated.

When the male coupler and the female coupler are moved close to each other in the coupled position, the protruded cylindrical member and the cylindrical member come into direct contact with each other and the valve shaft and the shaft member come into direct contact with each other. With the valve shaft and the shaft member remaining in direct contact with each other, the protruded cylindrical member moves partially into the engaging bore in the main case of the female coupler until the annular seal portion of the annular seal element mounted on the cylindrical member seals between the protruded cylindrical member and the cylindrical member. The first valve mechanism in the male coupler allows the valve body portion of the valve shaft to depart from the valve seat portion of the protruded cylindrical member as resisting against the yielding force of the spring thus to open the fluid passage between the protruded cylindrical member and the valve shaft. The second valve mechanism in the female coupler permits the cylindrical member to be pressed down by the distal end of the protruded cylindrical member and retract inwardly as resisting against the yielding force of the spring, hence opening the fluid passage between the cylindrical member and the shaft member.

According to the present invention, the annular seal element consisting mainly of the annular seal portion for sealing between the protruded cylindrical member and the cylindrical member in the coupled position and the another annular seal portion incorporating the valve body portion of the cylindrical member is provided on the distal end of the cylindrical member, whereby the sealing effect of the second valve mechanism in the female coupler can be ensured in the separated position even when the pressure of the fluid remains or is as low as the ambient pressure level in the female coupler and any leakage of the fluid containing air from the second valve mechanism can be prevented. As a result, the loss of the fluid such as a working oil will be avoided, the environment of the coupling device will hardly be polluted, and the operational durability of the coupling device will significantly be increased. As the two annular seal portions are provided on the single annular seal element, the arrangement of the distal end of the cylindrical member can be simplified thus contributing to the decrease of the overall number of the components.

The annular seal element may preferably be made of an elastic rubber material. In that case, the annular seal portion (the valve body portion of the cylindrical member) of the annular seal element is elastic deformed upon coming into direct contact with the cylindrical valve face portion of the shaft member, whereby any leakage of the fluid or air from the second valve mechanism in the female coupler can positively be prevented even if the pressure in the female coupler is close to the ambient pressure level. Also, the valve seat portion in the first valve mechanism may preferably be an annular taper face so that the valve body portion of the valve shaft comes into direct contact with the valve seat portion at metal touch. This allows the valve shaft to be urged towards the valve closed side by the yielding force of the spring when the two couplers are separated and its valve body portion to come in direct contact with the annular taper face, hence preventing any leakage of the fluid from the first valve mechanism in the male coupler.

The invention will be more clearly understood from the following description, given by way of example only, with reference to the accompanying drawings, in which:
Fig. 1 is a vertically cross sectional view of a coupling device (separated condition of a male coupler and a female coupler) according to one embodiment of the present invention;
Fig. 2 is a plan view of the male coupler;
Fig. 3 is a cross sectional end view taken along the line III-III of Fig. 1;
Fig. 4 is a cross sectional end view taken along the line IV-IV of Fig. 1;
Fig. 5 is an enlarged cross sectional view of a primary part of the two couplers (separated position);
Fig. 6 is a vertically cross sectional view of the two couplers (transient condition to coupled position);
Fig. 7 is a vertically cross sectional view of the two couplers (coupled position);
Fig. 8 is a vertically cross sectional view of a prior art coupling device (separated position);
Fig. 9 is an enlarged cross sectional view of a primary part of the coupling device shown in Fig. 8; and
Fig. 10 is a vertically cross sectional view of the coupling device (coupled position) shown in Fig. 8.

One preferred embodiment of the present invention will be described referring to the relevant drawings.

This embodiment is illustrated in the form a coupling device adapted for detachably connecting a hydraulic passage for supplying and discharging of hydraulic oil to and from one or more hydraulic clamping apparatuses mounted to a work pallet on which a plurality of works to be machined are detachably arranged in a machining center.

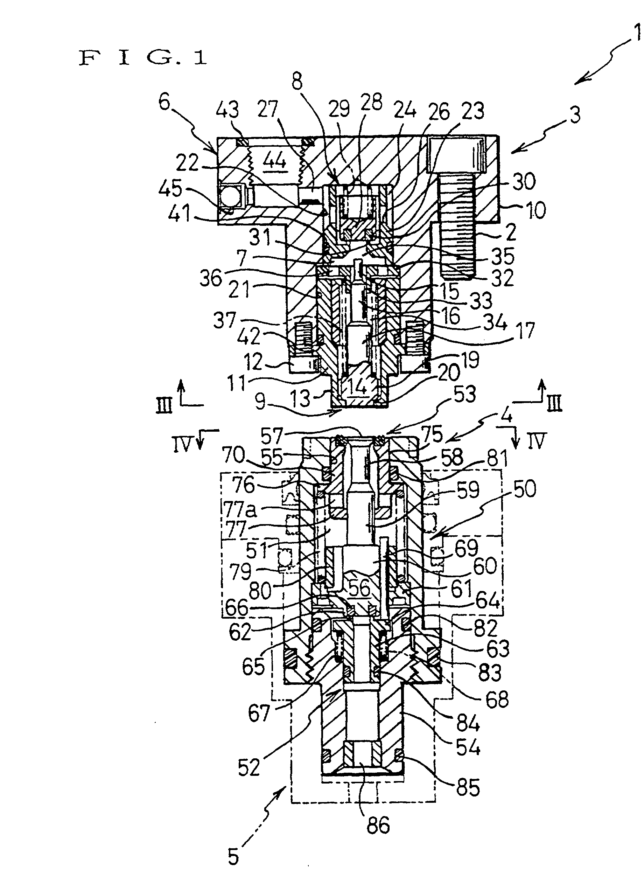

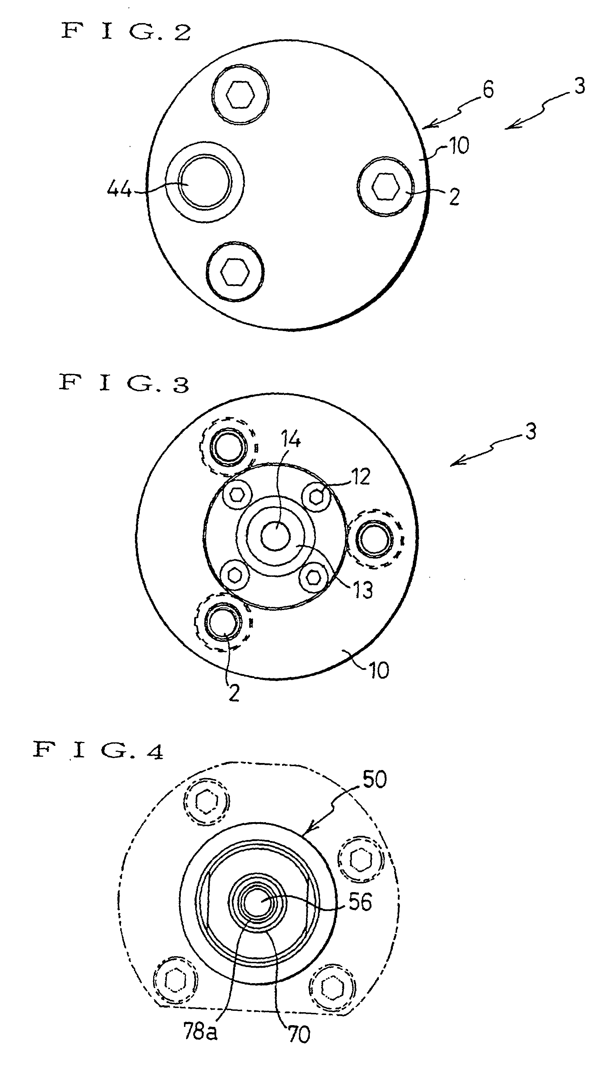

As shown in Figs. 1 to 4, the coupling device 1 comprises a male coupler 3 fixedly mounted by three bolts 2 on the work pallet at the upper side, a female coupler 4 provided at the opposite lower side to the male coupler 3 and mounted to the base of a machining center, and a hydraulic cylinder 5 for moving the female coupler 4 to and from the male coupler 3 for coupled and separated the coupling device 1.

First, the descriptions will be made for the male coupler 3.

As shown in Figs. 1 to 3, the male coupler 3 includes a main case 6, a hydraulic passage 7 in the main case 6, a main opening/closing valve 8 for opening and closing the passage 7, and an auxiliary opening/closing valve 9 for opening and closing the passage 7. The main case 6 is positioned vertically and has at the upper end a flange 10 thereof fixedly joined by the three bolts 2 to the work pallet (not shown). A cylindrical case 11 constituting a portion of the main case 6 is fitted into and tightened by four bolts 12 to the lower end of the main case 6.

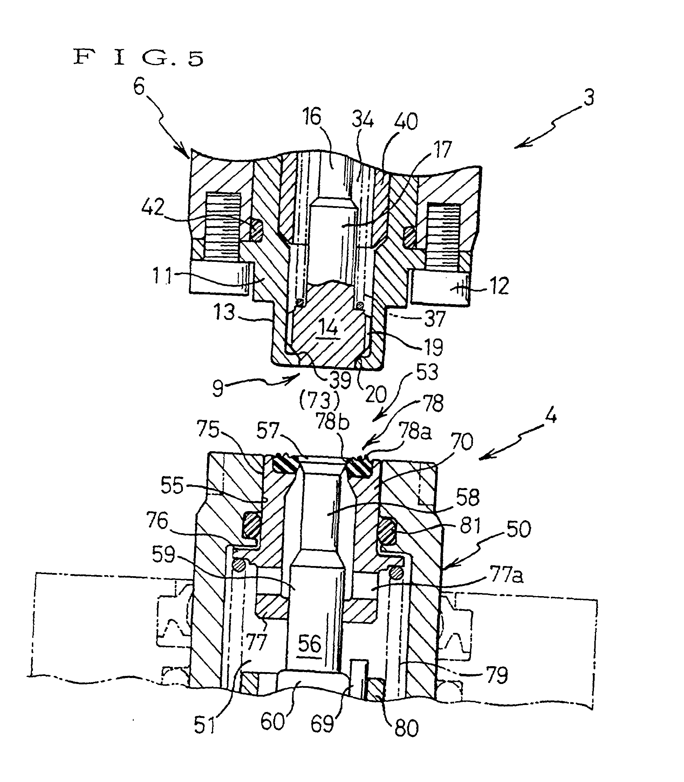

As shown in Figs. 1 and 5, the cylindrical case 11 has a downwardly protruded cylindrical portion 13 at the lower end thereof. The protruded cylindrical portion 13 is arranged so that it can be inserted partially into the female coupler 4. A valve shaft 14 is installed inside of the protruded cylindrical portion 13 for axial movements. The valve shaft 14 comprises, from the upper end to the lower end, a small-diameter portion 15, a medium-diameter portion 16, a large-diameter portion 17, a sliding guide face 19, and a valve body portion 20.

The main opening/closing valve 8 in the male coupler 3 is now explained.

As shown in Figs. 1, 6, and 7, the main opening/closing valve 8 comprises a valve seat member 23, a valve member 28, a compression spring 29, an protruded valve seat member 31, an annular seal element 30, a small-diameter portion 15 of the valve shaft 14, the passage 25, and apertures 26. The main case 6 has a bore 22 provided in an upper region thereof to extend continuously from the engaging bore 21 in the cylindrical case 11 and have an inner diameter slightly smaller than that of the engaging bore 21. The valve seat member 23 of a cylindrical shape is movably inserted in the bore 22. The main opening/closing valve 8 includes a passage 24 between the valve seat member 23 and the wall of the bore 22 and the apertures 26 communicated with the passages 25 and 27.

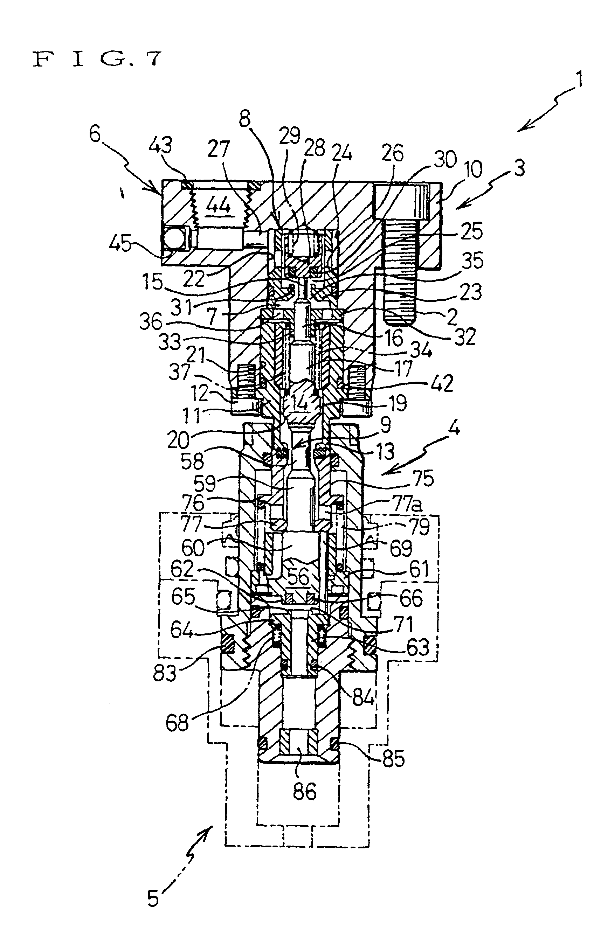

The valve member 28 is movably installed in the valve seat member 23 and biased by the compression spring 29 toward closing position (See Fig. 1). The annular seal element 30 made of a synthetic resin material (for example, nylon) is mounted to the lower end of the valve member 28, and the valve seat member 23 has an annular protruded valve seat portion 31 arranged opposite to the annular seal element 30. When the annular seal element 30 is pressed against the protruded valve seat portion 31, the passage 25 is closed. Referring to Fig. 7, when the two couplers 3 and 4 are coupled with each other, the valve member 28 is moved upwardly by the small-diameter portion 15 of the valve shaft 14 as resisting against the compression spring 29. The upward movement of the valve member 28 along the axial direction causes the main opening/closing valve 8 to open. When the two couplers 3 and 4 are separated from each other, the annular seal element 30 comes into contact with the protruded valve seat portion 31 thus closing the main opening/closing valve 8.

Then, the auxiliary opening/closing valve 9 in the male coupler 3 is explained.

As shown in Fig. 1 and Figs. 5 to 7, a spring receiver 32 is mounted at the upper end of the engaging bore 21 between the valve seat member 23 and the cylindrical case 11. The spring receiver 32 has a cylindrical guide portion 33 for guiding the medium-diameter portion 16 of the valve shaft 14, plural apertures 36 to communicate a passage 34 (provided in the cylindrical case 11) and a passage 35. An upper end of a compression spring 37 urging the valve shaft 14 downwardly is mounted on the guide cylindrical portion 33.

The auxiliary opening/closing valve 9 is a first valve mechanism. Its protruded cylindrical portion 13 is provided with a valve seat portion 39 in the form of an annular tapered face. The valve body portion 20 formed at the lower end of the valve shaft 14 can more to engage and disengage directly on the valve seat portion 39. The valve body portion 20 is urged downwardly by the compression spring 37. When the portion to disengages, a passage or passage region is formed between the protruded cylindrical portion 13 and the valve shaft 14. When the auxiliary opening/closing valve 9 is closed, the valve body portion 20 stays in direct contact, at metal touch, with the valve seat portion 39 thus closing the passage in the auxiliary opening/closing valve 9.

A spacer 40 is mounted in the cylindrical case 11 for controlling the residual pressure of the hydraulic oil or the negative pressure by means of selectively adjusting the volume in the passage between the main opening/closing valve 8 and the auxiliary opening/closing valve 9 in the male coupler 2. The numerals 41 to 43 denote seal elements, numeral 44 denotes a port for connecting with a hydraulic tube connector, and numeral 45 denotes a plug.

The female coupler 4 is now explained.

As shown in Figs. 1 and 4, the female coupler 4 comprises a main case 50, a hydraulic passage 51 in the main case 50, a main opening/closing valve 52 for opening and closing the passage 51, and an auxiliary opening/closing valve 53. The main case 50 is positioned vertically and a lower case thereof is threaded into the lower end of the main case 50, constituting a portion of the main case 50.

Referring to Fig. 1 and Figs. 5 to 7, the main case 50 has an engaging bore 55 provided in the upper end thereof for accepting the protruded cylindrical portion 13 of the male coupler 3 being engaged in. A shaft member 56 is securely mounted in the main case 50 to extend from the upper end to an intermediate step. The shaft member 56 comprises, from the upper end toward the lower end, a cylindrical valve face portion 57, a small-diameter portion 58, a medium-diameter portion 59 substantially identical in the diameter to the cylindrical valve face portion 57, a large-diameter portion 60, a flange portion 61, and a valve seat portion 62 substantially identical in the diameter to the large-diameter portion 60.

The main opening/closing valve 52 in the female coupler 4 is then explained.

As shown in Figs. 1, 6, and 7, the main opening/closing valve 52 comprises a cylindrical valve body 63, an annular projection 65 provided on the cylindrical valve body 63, an annular seal element 66 made of a synthetic resin material, a compression spring 68, and a plurality of pins 69. The lower case 54 has at the inside a large-diameter portion, a medium-diameter portion, and a small-diameter portion thereof arranged from the upper end to an intermediate step. The cylindrical valve body 63 is installed in the small-diameter portion of the lower case 54 for axial movements. The cylindrical valve body 63 has at the upper end a flange portion 64 thereof. The annular projection 65 is provided on the upper end of the flange portion 64 for coming into direct contact with the annular seal element 66 mounted on the lower end of the valve seat portion 62.

The compression spring 68 is mounted between the flange portion 64 and a step portion 67 for urging the cylindrical valve body 63 upwardly. When the two couplers 3 and 4 are separated from each other, the annular projection 65 urged by the compression spring 68 comes into direct contact with the annular seal element 66 thus closing the main opening/closing valve 52 (See Fig. 1). The flange portion 61 has six bores provided therein at equal intervals along the circumference. Three of the pins 69 are inserted into alternately three of the six bores. The three pins 69 are supported at the lower end directly by the flange portion 64. The remaining three bores serve as the passages of the hydraulic oil. As shown in Figs. 1 and 7, the upper ends of the three pins 69 extend upwardly through the large-diameter portion 60. When the two couplers 3 and 4 are coupled to each other, the pins 69 are pressed down by a cylindrical member 70 fitted on the shaft member 56 to move the cylindrical valve body 63 downwardly as resisting against the compression spring 68, hence opening the hydraulic passage 71 (causing the main opening/closing valve 52 to open) (See fig. 7).

The main opening/closing valve 53 in the female coupler 4 is then explained.

The auxiliary opening/closing valve 53 is a second valve mechanism. As shown in Fig. 5, the auxiliary opening/closing valve 53 comprises a shaft member 56 having a cylindrical valve face portion 57 and a cylindrical member 70 having a valve body portion 73 for opening and closing the hydraulic passage 74 between the cylindrical member 70 and the shaft member 56.

The cylindrical member 70 is positioned beneath and opposite to the distal end of the protruded cylindrical portion 13 of the male coupler 3 and is slidably fitted in the engaging bore 55. The cylindrical member 70 comprises, from the upper end towards the lower end, a cylindrical portion 75 substantially identical in the length to the engaging bore 55, a flange portion 76, and a cylindrical member lower portion 77. As shown in Fig. 5, an annular seal element 78 made of an elastic rubber material is fitted in and secured by adhesion or baking to a recess provided in the distal end of the cylindrical portion 75.

The annular seal element 78 comprises an annular seal portion 78a extending outwardly from the upper end of the cylindrical member 70 and an annular seal portion 78b extending toward axis center side then the cylindrical valve face portion 57, the two portions are integrally formed as a unit. The annular seal portion 78a seals off between the protruded cylindrical portion 13 and the cylindrical member 70 when the two couplers 3 and 4 are coupled to each other. The annular seal portion 78b serving as the valve body portion 73 of the cylindrical member 70 comes into direct contact with the cylindrical valve face portion 57 of the shaft member 56 when the two couplers 3 and 4 are separated and shuts down the passage in the auxiliary opening/closing valve 53.

A compression spring 79 is mounted for urging the cylindrical member 70 towards the closing position (in the upward direction) and a plurality of passages 77a are provided in the cylindrical member lower portion 77. When the two couplers 3 and 4 are coupled to each other, the cylindrical member lower portion 77 presses down the upper end of the pins 69, thus opening the main opening/closing valve 52.

A spacer 80 is provided between the large-diameter portion 60 of the shaft member 56 and the compression spring 79 for controlling the residual pressure of the hydraulic oil or the negative pressure by means of selectively adjusting the volume of the passage between the main opening/closing valve 52 and the auxiliary opening/closing valve 53 in the female coupler 4. Numerals 81 to 85 denote seals and 86 denotes a hydraulic oil discharge port.

The operation and function of the coupling device 1 will now be described.

As shown in Figs. 1 and 5, when the two couplers 3 and 4 are separated, the main opening/closing valve 8 in the male coupler 3 remains in its closed state with the valve body portion 20 of the valve shaft 14 pressed by the compression spring 37 against the valve seat region 39 of the protruded cylindrical portion 13 and hence the auxiliary opening/closing valve 9 is kept closed.

At the time, the main opening/closing valve 52 in the female coupler 4 remains in its closed state and the auxiliary opening/closing valve 53 stays in its closed state. More particularly, as the valve body portion 73 of the cylindrical member 70 is urged towards the cylindrical valve face portion 57 of the shaft member 56 by the compression spring 79, the valve body portion 73 which is a part of the annular seal element 78 remains elastically deformed. Accordingly, the fluid passage between the cylindrical member 70 and the shaft member 56 is shut down, hence preventing any oil or air from being leaked out from the auxiliary opening/closing valve 53 even if a pressure of the hydraulic oil remains in the female coupler 4 or the pressure in the female coupler 4 drops down close to the ambient pressure level.

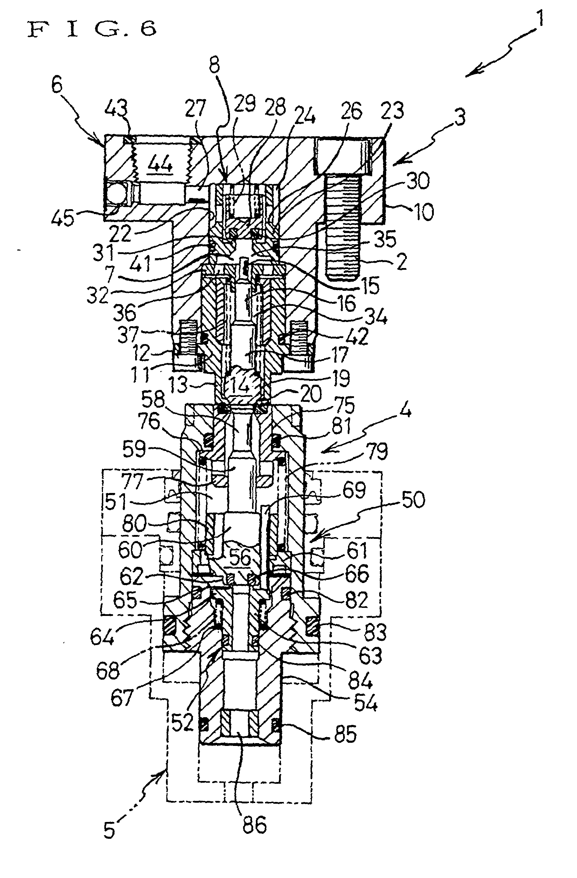

As shown in Figs. 6 and 7, when the male coupler 3 and the female coupler 4 are being coupled to each other, i.e. the female coupler 4 is advanced towards the male coupler 3 by the hydraulic cylinder 5, the protruded cylindrical portion 13 and the cylindrical member 70 come into direct contact with each other and simultaneously the valve shaft 14 and the shaft member 56 come into direct contact with each other. Then, with the valve shaft 14 and the shaft member 56 remaining in direct contact with each other, the protruded cylindrical portion 13 of the male coupler 3 moves into the engaging bore 55 in the main case 50 of the female coupler 4. As the valve shaft 14 of the male coupler 3 retracts in the upward direction relative to the cylindrical case 11, the two main opening/closing valves 8 and 52 are opened and simultaneously the two auxiliary opening/closing valves 9 and 53 are opened, hence allowing the passages in the two couplers 3 and 4 to be through.

In this coupled position, the gap between the protruded cylindrical portion 13 and the cylindrical member 70 is shut down assuredly by the annular seal portion 78a of the cylindrical member 70, hence preventing oil in the passages from leaking out from the gap between the protruded cylindrical portion 13 and the cylindrical member 70.

For switching to the separated position to separate the two couplers 3 and 4 from each other, the female coupler 4 is lifted down by the hydraulic cylinder 5. In the separated position, if the main opening/closing valve 52 in the female coupler 4 permits an amount of the oil of a higher pressure to be leaked and conveyed up to the upper end of the female coupler 4, the annular seal element 78 can elastically be deformed to prevent any leakage from the auxiliary opening/closing valve 53.

As set forth above, the coupling device 1 of the embodiment has the annular seal portion 78b of the annular seal element 78 adapted for increasing the sealing effect of the auxiliary opening/closing valve 53 while the two couplers 3 and 4 are separated, thus preventing any leakage of oil and the loss of oil, rarely polluting the environment of the coupling device 1, and ensuring the operational durability. Also, the annular seal element 78 is made of a highly elastic rubber material, hence ensuring the shielding of oil or air in the device and permitting the auxiliary opening/closing valve 53 to have a higher level of the sealing effect. Moreover, the two annular seal portions 78a and 78b are formed on the single annular seal element 78, hence contributing to the simplification of the structure at the distal end of the cylindrical portion 75 and decreasing the overall number of the components.

The coupling device 1 of the embodiment of the present invention may be of any applicable type for detachably connecting the passage of other fluids than the hydraulic oil. It is also possible to use the hydraulic cylinder 5 for driving the male coupler 3 rather than the female coupler 4 in the coupling device 1 or replace the hydraulic cylinder 5 with another appropriate means for moving one of the two couplers 3 and 4 relative to the other.

## Claims

1. A coupling device having a male coupler (3) and a female coupler (4) capable of detachably coupling with the male coupler (3) to connect and disconnect the passage of a pressurized fluid, wherein
the male coupler (3) comprises:
a first main opening/closing valve (8) operable by a valve shaft (14);
a first auxiliary valve mechanism (9) including a protruded cylindrical member (13) provided for partially inserting into the female coupler (4), the valve shaft (14) being installed for axial movements in the inner side of the protruded cylindrical member (13), and a valve body portion (20) provided on the valve shaft (14) for engaging and disengaging from the inner side with a valve seat portion (39) provided in the protruded cylindrical member (13) to shut down the passage of a fluid between the protruded cylindrical member (13) and the valve shaft (14); and
a spring (37) for urging the valve shaft towards a valve closed position, the female coupler (4) comprises:
a second main opening/closing valve (52) operable by a cylindrical member (70);
a second auxiliary valve mechanism (53) including a main body case (50) having an engaging bore (55) provided therein into which the protruded cylindrical member (13) can be advanced, a shaft member (56) mounted in the main body case (50); the cylindrical member (70) being fitted on the shaft member (56) for axially sliding movements and positioned opposite to the distal end of the protruded cylindrical member (13), and a valve body portion (73) provided on the cylindrical member (70) for engaging and disengaging from the inner side with a cylindrical valve face portion (57) provided near the distal end on the shaft member (56) to shut down the passage of a fluid between the cylindrical member (70) and the shaft member (56); and
a spring (79) for urging the cylindrical member (70) towards a valve closed position; and
an annular seal element (78) provided on the distal end of the cylindrical member (70) and having a first annular seal portion (78b) for sealing between the protruded cylindrical member (13) and the cylindrical member (70) in the coupled position and a second annular seal portion (78a) forming the valve body portion (73) of the cylindrical member (70), said first and second annular seal portions (78a,78b) being formed integrally.

2. A coupling device according to claim 1, wherein the annular seal element (78) is made of an elastic rubber material.

3. A coupling device according to claim 1 or 2, wherein the valve seat portion (39) in the first valve mechanism is an annular tapered face so that the valve body portion (20) of the valve shaft (14) comes into direct contact with the valve seat portion (39) with metal touch.

4. A coupling device according to claim 1, 2 or 3 wherein the first main opening/closing valve (8) includes:
a valve member (28) with an annular seal element (30);
a valve seat member 923) for housing the valve member (28) and having a protruded valve seat member (31) for sealing against the annular seal element (30); and
a compression spring (29) for biasing the valve member (28) and annular seal element (30) toward the protruded valve seat member (31); wherein
a portion (15) of the valve shaft (14) opposite the valve seat portion (39) is provided for moving the valve member (28) such that, when the male and female couplers are coupled, the valve member (28) and annular seal element (30) are moved away from the protruded valve seat member (31) against the bias of the compression spring (29).

5. A coupling device according to any preceding claim wherein the second main opening/closing valve (52) includes
a valve seat portion (62) with an annular seal element (66);
an axially movable cylindrical valve body (63) biassed by a compression spring (68) towards the valve seat portion (62) and having an annular projection (65) for sealing with the annular seal element (66); and
a plurality of pins (69) extending between the cylindrical member (70) of the second auxiliary valve mechanism and the cylindrical valve body (63) such that
when the male and female couplers are coupled, the pins (69) are pressed down by the cylindrical member (70) to move the cylindrical valve body (63) away from the annular seal element (66) against the bias of the compression spring (68).

## Patentansprüche

1. Kupplungsvorrichtung mit einer Vaterkupplung (3) und einer mit der Vaterkupplung (3) lösbar kuppelbaren Mutterkupplung (4) zum Kuppeln und Abkuppeln des Kanals eines Druckmediums, **dadurch gekennzeichnet, dass**
die Vaterkupplung (3) Folgendes umfasst:
- ein durch einen Ventilschaft (14) bedienbares erstes Hauptöffnungs/schließventil (8);
- einen ersten Hilfsventilmechanismus (9) mit einem für das teilweise Einführen in die Mutterkupplung (4) vorgesehenen vorstehenden zylindrischen Element (13), wobei der Ventilschaft (14) für axiale Bewegungen in der Innenseite des vorstehenden zylindrischen Elements (13) eingebaut ist, und einem an dem Ventilschaft (14) vorgesehenen Ventilkörperteil (20) für das Einund Ausrücken von der Innenseite mit einem in dem vorstehenden zylindrischen Element (13) vorgesehenen Ventilsitzteil (39) zum Sperren des Kanals eines Fluids zwischen dem vorstehenden zylindrischem Element (13) und dem Ventilschaft (14); und
- eine Feder (37) für das Drücken des Ventilschafts hin zu einer Ventilschließstellung,
die Mutterkupplung (4) Folgendes umfasst:
- ein durch ein zylindrisches Element (70) bedienbares zweites Hauptöffnungs-/schließventil (52);
- einen zweiten Hilfsventilmechanismus (53), welcher ein Hauptkörpergehäuse (50) mit einer darin vorgesehenen Einrückbohrung (55), in welche das vorstehende zylindrische Element (13) vorbewegt werden kann, ein in dem Hauptkörpergehäuse (50) angebrachtes Schaftelement (56), wobei das zylindrische Element (70) an dem Schaftelement (56) für axial gleitende Bewegungen angebracht und gegenüber dem distalen Ende des vorstehenden zylindrischen Elements (13) angeordnet ist, sowie einen an dem zylindrischen Element (70) vorgesehenen Ventilkörperteil (73) für das Ein- und Ausrücken von der Innenseite mit einem nahe des distalen Endes an dem Schaftelement (56) vorgesehenen zylindrischen Ventilstirnteil (57) umfasst, um den Kanal eines Fluids zwischen dem zylindrischen Element (70) und dem Schaftelement (56) zu sperren; und
- eine Feder (79) für das Drücken des zylindrischen Elements (70) hin zu einer Ventilschließstellung und
- ein an dem distalen Ende des zylindrischen Elements (70) vorgesehenes ringförmiges Dichtelement (78) mit einem ersten ringförmigen Dichtteil (78b) für das Abdichten zwischen dem vorstehenden zylindrischen Element (13) und dem zylindrischen Element (70) in der gekuppelten Stellung und einem zweiten ringförmigen Dichtteil (78a), welches den Ventilkörperteil (73) des zylindrischen Elements (70) bildet, wobei die ersten und zweiten ringförmigen Dichtteile (78a, 78b) einstückig ausgebildet sind.

2. Kupplungsvorrichtung nach Anspruch 1, **dadurch gekennzeichnet, dass** das ringförmige Dichtelement (78) aus einem elastischen Gummimaterial besteht.

3. Kupplungsvorrichtung nach Anspruch 1 oder 2, **dadurch gekennzeichnet, dass** der Ventilsitzteil (39) in dem ersten Ventilmechanismus eine ringförmige konische Fläche ist, so dass der Ventilkörperteil (20) des Ventilschafts (14) in direkten Kontakt mit dem Ventilsitzteil (39) mit Metallberührung kommt.

4. Kupplungsvorrichtung nach Anspruch 1, 2 oder 3, **dadurch gekennzeichnet, dass** das erste Hauptöffnungs-/schließventil (8) umfasst:
- ein Ventilelement (28) mit einem ringförmigen Dichtelement (30);
- ein Ventilsitzelement (23) für das Unterbringen des Ventilelements (28) mit einem vorstehenden Ventilsitzelement (31) zur Abdichtung gegenüber dem ringförmigen Dichtelement (30); und
eine Druckfeder (29) für das Vorspannen des Ventilelements (28) und des ringförmigen Dichtelements (30) hin zu dem vorstehenden Ventilsitzelement (31); **dadurch gekennzeichnet, dass**
ein Teil (15) des Ventilschafts (14) gegenüber dem Ventilsitzteil (39) für das Bewegen des Ventilelements (28) solcherart, dass bei Kuppeln der Vater- und Mutterkupplungen das Ventilelement (28) und das ringförmige Dichtelement (30) weg von dem vorstehenden Ventilsitzelement (31) gegen die Vorspannung der Druckfeder (29) bewegt werden, vorgesehen ist.

5. Kupplungsvorrichtung nach einem der vorstehenden Ansprüche, **dadurch gekennzeichnet, dass** das zweite Hauptöffnungs-/schließventil (52) Folgendes umfasst:
- einen Ventilsitzteil (623) mit einem ringförmigen Dichtelement (66);
- einen durch eine Druckfeder (68) hin zum Ventilsitzteil (62) vorgespannten axial beweglichen zylindrischen Ventilkörper (63) mit einem ringförmigen Vorsprung (65) für das Abdichten mit dem ringförmigen Dichtelement (66) und
- sich zwischen dem zylindrischen Element (70) des zweiten Hilfsventilmechanismus und dem zylindrischen Ventilkörper (63) so erstreckende mehrere Stifte (69), dass bei Kuppeln der Vater- und Mutterkupplungen die Stifte (69) durch das zylindrische Element (70) nach unten gedrückt werden, so dass der zylindrische Ventilkörper (63) gegen die Vorspannung der Druckfeder (68) weg von dem ringförmigen Dichtelement (66) bewegt wird.

## Revendications

1. Dispositif d'accouplement ayant un coupleur mâle (3) et un coupleur femelle (4) pouvant s'accoupler de manière amovible avec le coupleur mâle (3) pour connecter ou déconnecter le passage d'un fluide sous pression, dans lequel
le coupleur mâle (3) comporte :
une première vanne d'ouverture/de fermeture principale (8) pouvant être actionnée par un arbre de vanne (14),
un premier mécanisme formant vanne secondaire (9) incluant un élément cylindrique faisant saillie (13) prévu pour une insertion partielle dans le coupleur femelle (4), l'arbre de vanne (14) étant installé pour des déplacements axiaux dans le côté intérieur de l'élément cylindrique faisant saillie (13), et une partie formant corps de vanne (20) agencée sur l'arbre de vanne (14) pour venir en prise avec une partie formant siège de vanne (39) agencée dans l'élément cylindrique faisant saillie (13), et pour se libérer de celle-ci à partir du côté intérieur, afin de fermer le passage d'un fluide entre l'élément cylindrique faisant saillie (13) et l'arbre de vanne (14), et
un ressort (37) pour pousser l'arbre de vanne vers une position de fermeture de vanne, le coupleur femelle (4) comporte :
une seconde vanne d'ouverture/de fermeture principale (52) pouvant être actionnée par un élément cylindrique (70),
un second mécanisme formant vanne secondaire (53) comportant un carter de corps principal (50) ayant un alésage de mise en prise (55) agencé dans celui-ci dans lequel peut être avancé l'élément cylindrique faisant saillie (13), un élément formant arbre (56) monté dans le carter de corps principal (50), l'élément cylindrique (70) étant agencé sur l'élément formant arbre (56) pour des déplacements de coulissement axiaux, et étant positionné à l'opposé de l'extrémité distale de l'élément cylindrique faisant saillie (13), et une partie formant corps de vanne (73) agencée sur l'élément cylindrique (70) pour venir en prise avec une partie de face de vanne cylindrique (57) agencée à proximité de l'extrémité distale de l'élément formant arbre (56), et pour se libérer de celle-ci à partir du côté intérieur, afin de fermer le passage d'un fluide entre l'élément cylindrique (70) et l'élément formant arbre (56), et
un ressort (79) pour pousser l'élément cylindrique (70) vers une position de fermeture de vanne, et
un élément formant joint d'étanchéité annulaire (78) agencé sur l'extrémité distale de l'élément cylindrique (70), et ayant une première partie de joint d'étanchéité annulaire (78b) pour assurer l'étanchéité entre l'élément cylindrique faisant saillie (13) et l'élément cylindrique (70) dans la position accouplée, et une seconde partie de joint d'étanchéité annulaire (78a) formant la partie formant corps de vanne (73) de l'élément cylindrique (70), lesdites première et seconde parties de joint d'étanchéité annulaire (78a, 78b) étant formées d'une seule pièce.

2. Dispositif d'accouplement selon la revendication 1, dans lequel l'élément formant joint d'étanchéité annulaire (78) est constitué d'un matériau de caoutchouc élastique.

3. Dispositif d'accouplement selon la revendication 1 ou 2, dans lequel la partie formant siège de vanne (39) située dans le premier mécanisme formant vanne est une face conique annulaire, de sorte que la partie formant corps de vanne (20) de l'arbre de vanne (14) vient en contact direct avec la partie formant siège de vanne (39) à l'aide d'une touche métallique.

4. Dispositif d'accouplement selon la revendication 1, 2 ou 3, dans lequel la première vanne d'ouverture/de fermeture principale (8) comporte :
un élément de vanne (28) muni d'un élément formant joint d'étanchéité annulaire (30),
un élément formant siège de vanne (23) pour recevoir l'élément de vanne (28), et ayant un élément formant siège de vanne faisant saillie (31) pour assurer l'étanchéité contre l'élément formant joint d'étanchéité annulaire (30), et
un ressort de compression (29) pour rappeler l'élément de vanne (28) et l'élément formant joint d'étanchéité annulaire (30) vers l'élément formant siège de vanne faisant saillie (31), dans lequel
une partie (15) de l'arbre de vanne (14) opposée à la partie de siège de vanne (39) est prévue pour déplacer l'élément de vanne (28) de telle sorte que, lorsque les coupleurs mâle et femelle sont accouplés, l'élément de vanne (28) et l'élément formant joint d'étanchéité annulaire (30) sont éloignés de l'élément formant siège de vanne faisant saillie (31) à l'encontre du rappel du ressort de compression (29).

5. Dispositif d'accouplement selon l'une des revendications précédentes, dans lequel la seconde vanne d'ouverture/de fermeture principale (52) comporte
une partie formant siège de vanne (62) munie d'un élément formant joint d'étanchéité annulaire (66),
un corps de vanne cylindrique mobile axialement (63) rappelé par un ressort de compression (68) vers la partie formant siège de vanne (62), et ayant une saillie annulaire (65) pour assurer l'étanchéité avec l'élément formant joint d'étanchéité annulaire (66), et
une pluralité de broches (69) s'étendant entre l'élément cylindrique (70) du second mécanisme formant vanne secondaire et le corps de vanne cylindrique (63) de telle sorte que
lorsque les coupleurs mâle et femelle sont accouplés, les broches (69) sont comprimées vers le bas par l'élément cylindrique (70) pour éloigner le corps de vanne cylindrique (63) de l'élément formant joint d'étanchéité annulaire (66) à l'encontre du rappel du ressort de compression (68).
